# EUROPÄISCHE PATENTSCHRIFT

(11) **EP 4 261 347 B1**
(45) Veröffentlichungstag und Bekanntmachung des Hinweises auf die Patenterteilung: **04.11.2026**
(21) Anmeldenummer: 23161111.2
(22) Anmeldetag: 10.03.2023
(51) Int. Cl.: E01B 9/68

(54) **ZWISCHENLAGE**
INTERMEDIATE LAYER
COUCHE INTERMÉDIAIRE

(30) Priorität: 13.04.2022 AT 922022
(43) Veröffentlichungstag der Anmeldung: 18.10.2023
(73) Patentinhaber: Getzner Werkstoffe Holding GmbH, 6706 Bürs (AT)
(72) Erfinder: Loy, Harald, 6780 Schruns (AT); Heim, Markus, 6840 Götzis (AT); Potocan, Stefan, 6710 Nenzing (AT); Burtscher, Johannes, 6700 Bludenz (AT)
(74) Vertreter: Torggler & Hofmann Patentanwälte - Rankweil

(56) Entgegenhaltungen:
- DE-A1- 102016 111 064
- DE-B3- 102016 108 097

## Beschreibung

Die vorliegende Erfindung betrifft eine Zwischenlage gemäß den Merkmalen des Oberbegriffs des Anspruchs 1, eine Gleisanlage und die Verwendung einer Zwischenlage.

Zwischenlagen werden im Eisenbahnoberbau zwischen Schiene und Bahnschwelle angeordnet. Durch ihr elastisches Verhalten soll der Eisenbahnoberbau geschont werden. Um dem Problem des abrasiven Verschleißes des Oberbaus durch den Zugverkehr zu begegnen, werden elastische Zwischenlagen heute in der Regel mit Steifigkeiten kleiner 120 kN/mm eingesetzt. Diese elastischen Zwischenlagen sorgen idealerweise für eine Vergrößerung der Biegelinie der Schiene, wodurch einwirkende Kräfte aus der Überfahrt der Züge auf mehrere Bahnschwellen verteilt werden. Je elastischer, d.h. weicher, diese elastischen Elemente ausgebildet sind, desto größer ist die lastverteilende Wirkung. Alle Oberbaukomponenten werden dadurch geschont und die Langlebigkeit des Systems wird erhöht. Vor allem beim Schotteroberbau wird dem abrasiven Verschleiß des Gleisschotters entgegengewirkt.

Mit zunehmender Elastizität der Zwischenlage nimmt die Entkoppelung der Schiene von der Bahnschwelle zu und führt zu einem Anstieg der Schallabstrahlung der Schiene. Der daraus resultierende, sehr unbeliebte Bahnlärm erhöht sich. Um dem Problem des Bahnlärms insbesondere des sogenannten Schienensingens zu begegnen, werden deshalb mitunter sehr steife Zwischenlagen eingesetzt.

Anforderungen an die Zwischenlage im Hinblick auf die Schonung des Oberbaus und einer möglichst guten Vermeidung des Bahnlärms widersprechen sich somit vordergründig. Das Problem eines erhöhten Lärmpegels durch weiche Zwischenlagen ist bekannt. Ebenso ist bekannt, dass mit einer anteilig erhöhten Dämpfung diesem Effekt theoretisch gegengesteuert werden könnte, wobei mit den bekannten Lösungsansätzen bislang nur stark begrenzte Wirkungen erzielt werden konnten.

Die WO 2005/010277 A1 offenbart ein elastisches Pad, das unter einer Schiene angeordnet wird und beispielsweise aus Hartgummi besteht. Im Inneren weist das Pad einen Dämpfungskörper auf, der eine Reduktion von Schwingungen und Bahnlärm bewirken soll. Der Dämpfungskörper kann sowohl aus einem festen als auch aus einem flüssigen Material bestehen, beispielsweise ein hochdämpfendes Polyurethan oder ein Silikonöl.

Die DE 10 2016 111 064 A1 offenbart ein elastisches Element für eine Schiene für Schienenfahrzeuge. Dieses Element dient zum Tragen einer Schiene und ist zwischen der Schiene sowie dem Untergrund angeordnet. Es besteht aus einem Grundkörper aus Kautschuk oder einem Elastomer, bspw. EPDM, sowie aus mindestens einem Dämpfungselement aus einem hochdämpfenden Kunststoffmaterial. Durch die Verformbarkeit des elastischen Elements soll eine hohe statische und dynamische Elastizität erreicht werden, ohne dass es dadurch zum Anstieg des Luftschalls kommt. Die Schrift offenbart mechanische Kennwerte, beispielsweise eine statische Steifigkeit von 12 bis 150 kN/mm, einen Versteifungsfaktor als Verhältnis von dynamischer zu statischer Steifigkeit von höchstens 1,5 sowie einen mechanischen Verlustfaktor von 0,15 und 0,55.

Die Schrift DE 10 2016 108 097 B3 offenbart eine Zwischenlage, die zwischen einer Schiene und einer Bahnschwelle angeordnet wird. Diese Zwischenlage weist an ihrer Ober- und/oder Unterseite verschiedene Längs- und Querstege auf, wobei zumindest ein Längssteg aus einem Material niedrigerer Steifigkeit und zumindest ein Quersteg aus einem Material höherer Steifigkeit als der Rest der Zwischenlage besteht. Diese Zwischenlage soll sowohl eine elastische Entkopplung zwischen Schiene und Bahnschwelle ermöglichen als auch gleichzeitig den Schienenlärm auf einem geringen Niveau halten. Die Schrift offenbart mechanische Kennwerte, beispielsweise eine statische Steifigkeit von bis zu 350 kN/mm sowie eine Versteifung, berechnet als Verhältnis der dynamischen Steifigkeit bei 10 Hz zur statischen Steifigkeit, von mindestens 1,5.

Weiterer Stand der Technik wird in den Schriften CN 108148220 A, KR 2021/0132288 A, CN 101942786 A und WO 2018/087387 A1 offenbart.

Nachteilig bei dem bisherigen Stand der Technik ist meist die mangelnde Vereinbarkeit der eingangs genannten, sich widersprechenden Eigenschaften. Einerseits muss eine Zwischenlage eine hohe Elastizität und somit eine niedere Steifigkeit aufweisen, um die Last bei Überfahrt gleichmäßig auf die Bahnschwellen zu verteilen. Andererseits ist eine hohe Steifigkeit ab gewissen Frequenzbereichen notwendig, um den Bahnlärm zu reduzieren. Für den Bahnlärm maßgebend ist der Frequenzbereich von 250 Hz bis 8000 Hz. Bei der für die Luftschallabstrahlung verantwortlichen dynamischen Steifigkeit in diesem hochfrequenten Bereich soll eine Zwischenlage sehr steif reagieren, wodurch die Schiene stärker an die Bahnschwellen gekoppelt wird. Die Bewegungsenergie der Schiene wird somit besser über die Bahnschwelle in den Untergrund abgeleitet und die Lärmabstrahlung aus dem Rad-Schienen-Kontakt also der Bahnlärm wird dadurch wesentlich vermindert. Idealerweise weist eine Zwischenlage also eine niedere statische Steifigkeit, eine niedere dynamische Steifigkeit bei niederen Frequenzen, ca. unter 40 Hz, und eine hohe Steifigkeit bei höheren Frequenzen, z.B. ab ca. 250 Hz, auf. Eine ideale oder zumindest bessere Abstimmung aus Steifigkeit und Dämpfung einer Zwischenlage für Schienenfahrzeuge ist gleichermaßen begehrt sowie bislang unbekannt.

Ein weiterer Nachteil der elastischen Zwischenlagen ist die damit einhergehende Erhöhung der Lärmabstrahlung durch Schienenschwingungen in longitudinaler Richtung. Bedingt durch mehr Schienenbeweglichkeit infolge höherer Elastizität der Zwischenlage schwingt die Schiene stärker, der Schienenschallanteil wird ungewollt erhöht und das Rollgeräusch infolge des Rad-Schienen-Kontakts wird unvorteilhaft lauter. Die Schallausbreitung entlang der Schiene ist ebenso größer. Ein singendes Geräusch der Schiene (sogenanntes Schienensingen) ist oft bereits lange vor Annäherung des Zuges zu hören.

Diese grundsätzliche Problematik wurde in den oben genannten Schriften DE 10 2016 111 064 A1 und DE 10 2016 108 097 B3 bereits erkannt. Zur Beseitigung des Problems schlägt die DE 10 2016 111 064 A1 das Einbetten von Dämpfungselementen in das elastische Material des Grundkörpers vor, welche elastisch nachgiebig nach Art einer Brücke getragen sind. Die DE 10 2016 108 097 B3 schlägt Längs- und Quervertiefungen in der Zwischenlage vor.

Ein weiterer Nachteil von bislang verwendeten Kautschuken und Elastomeren zur Dämpfung ist, dass diese für die Dämpfung notwendige Weichmacher enthalten können, die über die Zeit herausdiffundieren und zu einer zeitlichen Versteifung führen können. Dies hat eine Reduktion der Elastizitätswirkung zur Folge.

Solche nachteiligen Effekte sind bekannt und stellen ein großes Problem dar. Das benötigte Potential hochelastischer Zwischenlagen zur Kräftereduktion und somit zur Schonung des Eisenbahnoberbaus wird heute noch nicht im gewünschten Maß erreicht, weil die Erhöhung des Lärmpegels dem entgegensteht. Harte Zwischenlagen eignen sich zur Reduktion des Bahnlärms, jedoch führen diese zu einem schnellen Oberbauverschleiß. Daher sind aufwendige und teure Lärmminderungsmaßnahmen, wie z.B. Schienenstegdämpfer oder Lärmschutzwände, notwendig. Dies sind signifikante Nachteile.

Die Aufgabe der vorliegenden Erfindung ist es, eine Zwischenlage bereitzustellen, die den oben genannten Stand der Technik in Bezug auf dessen Nachteile verbessert. Es soll somit eine Zwischenlage bereitgestellt werden, die den Eisenbahnoberbau möglichst gut schont und gleichzeitig den Bahnlärm so gut wie möglich vermeidet.

Zur Lösung dieser Aufgabe schlägt die Erfindung eine Zwischenlange gemäß Patentanspruch 1 vor. Es ist somit ausgehend von einer eingangs genannten Zwischenlage vorgesehen, dass die Schicht der Zwischenlage eine dynamische Versteifung von mindestens 1,5 aufweist, wobei sich die dynamische Versteifung aus dem Verhältnis der dynamischen Steifigkeit bei 100 Hz zur dynamischen Steifigkeit bei 10 Hz berechnet.

Ein Vorteil ist die Reduzierung des abrasiven Verschleißes des Eisenbahnoberbaus durch den Zugverkehr. Ein weiterer Vorteil ist die Reduzierung des allgemeinen Bahnlärms, insbesondere des sogenannten Schienensingens also der Lärmabstrahlung infolge des Rad-Schienen-Kontakts und der Schienenschwingungen in longitudinaler Richtung. Es gelingt mit der Erfindung somit sowohl den abrasiven Verschleiß als auch den Bahnlärm gleichzeitig zu reduzieren.

Als Eisenbahnoberbau wird der Teil einer Gleisanlage bezeichnet, der auf dem Unterbau, wie **z.B.** einem Schotterbett aufliegt. Der Eisenbahnoberbau umfasst zumindest eine Schiene, zumindest eine Zwischenlage sowie zumindest eine Bahnschwelle.

Die Zwischenlage hat neben der Elastizität einen signifikant erhöhten Dämpfungsanteil. Darüber hinaus versteift sich die Zwischenlage mit zunehmender Frequenz sehr stark. Durch die Dämpfung und die dynamische Versteifung wird die Abklingrate der Schiene positiv beeinflusst. Die Schienen werden somit in longitudinaler Richtung am Schwingen behindert. Bei Zugüberfahrt schwingt der Eisenbahnoberbau in den für den Bahnlärm wesentlichen Frequenzanteilen weniger und der primäre Luftschall wird reduziert. Die Zugvorbeifahrt wird deutlich leiser wahrgenommen.

Die dynamische Steifigkeit kann der EN 13146-9:2020-07 folgend bestimmt werden.

Die dynamische Versteifung ist das Verhältnis der dynamischen Steifigkeit bei einer höheren Frequenz zur dynamischen Steifigkeit bei einer niederen Frequenz. Bei vorliegender Erfindung wird die dynamische Versteifung der Schicht der Zwischenlage aus dem Verhältnis der dynamischen Steifigkeit bei 100 Hz zur dynamischen Steifigkeit bei 10 Hz bestimmt. Sie liegt erfindungsgemäß bei zumindest 1,5. Bestimmt man die dynamische Versteifung dieser Schicht der Zwischenlage aus dem Verhältnis der dynamischen Steifigkeit bei 10 Hz zur dynamischen Steifigkeit bei 1 Hz so liegt diese günstigerweise aber ebenfalls bei über 1,5.

Die statische Steifigkeit der Schicht der Zwischenlage liegt bevorzugt zwischen 100 kN/mm, kiloNewton pro Millimeter, und 300 kN/mm. Ein Bereich der statischen Steifigkeit von 20 kN/mm bis 500 kN/mm ist aber auch denkbar. Die statische Steifigkeit kann der EN 13146-9:2020-07 folgend bestimmt werden.

Der mechanische Verlustfaktor der genannten Schicht der Zwischenlage kann bei über 0,25 liegen, wobei Werte bis 0,8 möglich sein können. Bevorzugt liegt der mechanische Verlustfaktor der genannten Schicht der Zwischenlage zwischen 0,25 und 0,45. Der mechanische Verlustfaktor kann der DIN EN ISO 6721-1:2019-09 folgend bestimmt werden.

Die Schicht der Zwischenlage kann als Vollmaterial, also praktisch ohne Porosität, ausgeführt sein, kann aber auch als eine Schaumstruktur vorliegen. Im Fall einer Schaumstruktur kann die Schicht der Zwischenlage eine teilweise Volumenkompressibilität zulassen. Vertiefungen oder Ausnehmungen in der Zwischenlage können bei vorliegender Erfindung nach Belieben ausgespart oder eingeplant werden. Die Schicht der Zwischenlage ist eine Polyurethanschicht. Es kann auf zusätzliche Weichmacher verzichtet werden.

Ist die Schicht der Zwischenlage eine Polyurethanschicht, so ist sie besonders bevorzugt als eine geschäumte Schicht mit einer Porosität von maximal 20% ausgebildet.

Zum Schutz der Schicht der Zwischenlage vor mechanischen oder chemischen Einwirkungen sowie zur Verbesserung der Streustromisolation kann eine dünne Schutzlage vorgesehen sein. Die Schutzlage kann entweder einseitig oder zweiseitig, z.B. in Sandwich- Bauform, vorgesehen sein. In anderen Worten kann vorgesehen sein, dass die Zwischenlage zumindest eine Schutzlage aufweist, wobei die Schutzlage auf zumindest einer Oberfläche der Schicht angeordnet ist, vorzugsweise jeweils eine der Schutzlagen auf einander gegenüberliegenden Oberflächen der Schicht angeordnet ist. Die Schutzlage kann mit einem Polyurethankleber fest auf die Zwischenlage geklebt sein. Es kann vorgesehen sein, dass die zumindest eine Schutzlage eine geringere Permeabilität als die Schicht aufweist. Durch diese geringere Permeabilität schützt die Schutzlage somit die Polyurethanschicht vor Umwelteinflüssen wie beispielsweise Regen, Schnee oder Luftfeuchte. Günstig ist es auch, wenn die Schutzlage härter als die Schicht ist. Durch diese höhere Härte schützt die Schutzlage somit die Polyurethanschicht vor Umwelteinflüssen wie Schotter oder Staub.

Die Schutzlage kann Polyethylen beinhalten oder daraus bestehen. Das Polyethylenmaterial kann ein Hart-Polyethylen sein. Die Schutzlage kann zur Verbesserung des Kleberauftrages zusätzlich mit einer hydrophob wirkenden Vliesschicht ausgestattet sein. Die Dauerhaftigkeit der Zwischenlage kann damit zusätzlich erhöht werden **(z.B.** bei Anwendung im Schwerlastverkehr mit Achslasten über 25 Tonnen). Damit kann im Betrieb außerdem vermieden werden, dass die Zwischenlage über die Zeit fest an der Schiene anhaftet. Derzeit müssen in der Praxis Zwischenlagen oft mechanisch, **z.B.** mit einer Spachtel, entfernt werden, um sie zu wechseln. Dieser zusätzliche Aufwand kann mit einer solchen optionalen Schutzlage entfallen. Die Schutzlage könnte auch als Schutzschicht bezeichnet werden.

Die Schicht der Zwischenlage wie auch die zumindest eine Schutzlage können unterschiedliche Formen aufweisen. Die Schicht der Zwischenlage kann dabei im Wesentlichen eckig oder rund sein. Es bietet sich beispielsweise die Möglichkeit an, einen kreisrunden Innenkern als Schicht der Zwischenlage herzustellen und mit einer Schutzlage, die eine runde oder eckige Form aufweisen kann, vollständig oder in Sandwichbauweise zu ummanteln. Es kann auch vorgesehen sein, dass die Schicht der Zwischenlage zumindest ein rundes oder eckiges Loch aufweist. Im selben Maße kann auch die Schutzlage zumindest ein rundes oder eckiges Loch aufweisen. Diese Ausführungsbeispiele der Formen der Schicht der Zwischenlage und eventueller Schutzlagen sind in keinerlei Weise als einschränkend zu verstehen.

Das Polyurethanmaterial der Schicht der Zwischenlage also in anderen Worten die Polyurethanschicht weist als Komponenten zumindest einen Kettenverlängerer und zumindest einen Vernetzer auf. Darüber hinaus kann die Polyurethanschicht auch noch andere Additive beinhalten. Zusätzliche Additive können Katalysatoren wie z.B. 1,4-Diazabicyclo[2.2.2]oktan, DABCO, Stabilisatoren wie z.B. Silikon-Polyether-Copolymere, Flammschutzmittel wie z.B. Phosphorsäureester, Farbstoffe und/oder Emulgatoren sein.

Polyurethan ist ein Polymermaterial, welches durch Polyaddition von mindestens einem Polyol und mindestens einem Polyisocyanat hergestellt wird. Das Polyol und das Polyisocyanat müssen dabei mindestens eine Funktionalität von zwei aufweisen. Im einfachsten Fall handelt es sich also um ein Diol und ein Diisocyanat. Bei komplexeren Polyurethanen können Mischungen von Polyolen und Mischungen von Polyisocyanaten miteinander reagieren. Durch Zusätze können die Eigenschaften des Polyurethans maßgeblich beeinflusst werden. Diese Zusätze umfassen Kettenverlängerer, Vernetzer und eventuell Treibmittel.

Kettenverlängerer sind reaktive kurzkettige Diole oder auch Diamine, welche bei der Herstellung von Polyurethanen durch Umsetzung mit Diisocyanaten zur Bildung von Hartsegmenten, also Block-Copolymeren, führen. Kettenverlängerer beeinflussen die chemische Struktur eines Polyurethanmaterials und somit auch die mechanischen Eigenschaften.

Vernetzung bezeichnet in der makromolekularen Chemie Reaktionen, bei denen eine Vielzahl einzelner Makromoleküle zu einem dreidimensionalen Netzwerk verknüpft wird. Die Verknüpfung kann entweder direkt beim Aufbau der Makromoleküle durch Einbringung von mindestens trifunktionellen reaktiven Komponenten also Vernetzern oder durch Reaktionen an bereits bestehenden Polymeren erreicht werden. Durch den Prozess der Vernetzung verändern sich die Eigenschaften der vernetzten Stoffe. Vernetzer sind reaktive tri- oder höherfunktionelle Alkohole oder Amine. Vernetzer beeinflussen die chemische Struktur eines Polyurethanmaterials und somit auch die mechanischen Eigenschaften.

Treibmittel bewirken durch Reaktion mit Isocyanaten eine Freisetzung von Gas. Dieses Gas führt zu Poren innerhalb des Polyurethanmaterials. Durch Treibmittel lässt sich ein Polyurethanmaterial somit aufschäumen. Ein übliches Treibmittel ist beispielsweise Wasser. Das Treibmittel beeinflusst somit das Raumgewicht des Polyurethanmaterials und somit auch seine mechanischen Eigenschaften.

Das Raumgewicht oder auch die scheinbare, geometrische Dichte oder Rohdichte ist die Dichte eines porösen Festkörpers basierend auf dem Volumen einschließlich der Porenräume.

Die Einheit pphp steht für parts per hundred parts polyol und ist somit eine Konzentrationsangabe. Diese bezieht sich auf die Massen von Stoffen. Beispielsweise entsprechen 0,1 pphp einem Zehntel-Gramm des Stoffes A auf 100 Gramm des Polyols, mit anderen Worten ein Gramm des Stoffes A auf 1000 Gramm Polyol. Wird also 0,1 pphp Kettenverlängerer verwendet, handelt es sich um 1 Gramm des Kettenverlängerers auf 1000 Gramm des Polyols.

Sekundäre Alkohole sind Chemikalien, die eine Alkohol-Funktionalität also eine OH-Gruppe an einem Kohlenstoff aufweisen, der neben der Bindung zur OH-Gruppe mit nur einem Wasserstoff und zwei weiteren Elementen, in der Regel zwei weiteren Kohlenstoffen, verbunden ist.

Bevorzugt ist vorgesehen, dass die Polyurethanschicht der Zwischenlage sortenrein und/oder in sich gleichmäßig aufgebaut ist.

Eine Polyurethanschicht ist dann sortenrein, wenn sie nur aus einem einzigen bestimmten Polyurethanmaterial besteht. Mit anderen Worten ist eine Polyurethanschicht dann sortenrein, wenn sie aus einem einzigen Monomaterial besteht.

Eine Polyurethanschicht heißt in sich gleichmäßig aufgebaut, wenn sie makroskopisch einheitlich aufgebaut ist und die Komponenten, die zum Herstellen eines solchen Polyurethanmaterials miteinander reagieren, gleichmäßig innerhalb des Materials verteilt sind. Bei einem ungeschäumten Polyurethan handelt es sich um ein gleichmäßig aufgebautes Vollmaterial. Bei einem geschäumten Polyurethan entstehen definitionsgemäß Gaseinschlüsse innerhalb des Materials sowie Poren an dessen Oberfläche. Somit handelt es sich bei einem geschäumten Polyurethan, das in sich gleichmäßig aufgebaut ist, um ein Material mit gleichmäßig verteilten Gaseinschlüssen bzw, Poren innerhalb des gleichmäßig aufgebauten Materials sowie gleichmäßig verteilten Poren an dessen Oberfläche.

In einer besonders vorteilhaften Ausführungsform der Erfindung kann der mindestens eine Kettenverlängerer der Polyurethanschicht ein mittleres Molekulargewicht von 62-1.000 g/mol also Gramm pro Mol, insbesondere von 75-350 g/mol, aufweisen.

Weiters bevorzugt kann vorgesehen sein, dass der mindestens eine Kettenverlängerer einen Massenanteil bezogen auf Massenanteile in einem Polyol des Polyurethans von 0,1-20 pphp, insbesondere 3-18 pphp, aufweist.

Weiters bevorzugt kann vorgesehen sein, dass der mindestens eine Kettenverlängerer zwei Alkoholgruppen aufweist.

Es kann auch vorgesehen sein, dass der mindestens eine Kettenverlängerer mindestens eine sekundäre Alkoholgruppe aufweist.

Mögliche Kettenverlängerer können beispielsweise Ethylenglykol (1,2-Ethandiol), 1,2-Propylenglykol (1,2-Propandiol), 1,3-Propylenglykol (1,3-Propandiol), 2-Methyl-1,3-propandiol, 2,2-Dimethyl-1,3-propandiol, 2-Butyl-2-ethyl-1,3-propandiol, Diethylenglykol (2-(2-Hydroxyethoxy)ethanol)), 2,3-Butandiol, 2-Methyl-2,4-pentandiol, 2-Buten-1,4-diol oder 2-Butin-1,4-diol sein. Diese Beispiele an möglichen Kettenverlängerern sind in keiner Weise einschränkend zu verstehen.

In einer besonders vorteilhaften Ausführungsform der Erfindung kann der mindestens eine Vernetzer der Polyurethanschicht ein mittleres Molekulargewicht von 90-1.000 g/mol, insbesondere von 100-350 g/mol, aufweisen.

Weiters bevorzugt kann vorgesehen sein, dass der mindestens eine Vernetzer der Polyurethanschicht einen Massenanteil bezogen auf Massenanteile in einem Polyol des Polyurethans von 0,1-20 pphp, insbesondere 3-18 pphp, aufweist.

Weiters bevorzugt kann vorgesehen sein, dass der mindestens eine Vernetzer mindestens drei Alkoholgruppen aufweist.

Es kann auch bevorzugt vorgesehen sein, dass der mindestens eine Vernetzer mindestens eine sekundäre Alkoholgruppe aufweist.

Mögliche Vernetzer können beispielsweise 1,2,3-Propantriol oder 1,1,1-Trimethylol-propan (TMP, 2-Ethyl-2-(hydroxymethyl)-propan-1,3-diol) sein. Diese Beispiele an möglichen Vernetzern sind in keiner Weise einschränkend zu verstehen.

Neben der Zwischenlage an sich betrifft die Erfindung auch eine Gleisanlage mit zumindest einer Bahnschwelle und zumindest zwei Schienen, wobei zwischen der Bahnschwelle und der jeweiligen Schiene eine erfindungsgemäße Zwischenlage angeordnet ist.

Zusätzlich betrifft die Erfindung auch noch eine Verwendung einer erfindungsgemäßen Zwischenlage, wobei die Zwischenlage zwischen einer Bahnschwelle und einer Schiene angeordnet wird.

Bevorzugte Merkmale der Gleisanlage und/oder der Verwendung ergeben sich aus den geschilderten bevorzugten Merkmalen der Zwischenlage an sich.

Weitere Vorteile und Einzelheiten bevorzugter Ausgestaltungsformen der Erfindung ergeben sich aus den Figuren sowie der dazugehörigen Figurenbeschreibung. Dabei zeigen:
Fig. 1: ein Ausführungsbeispiel einer Zwischenlage mit einer Schicht;
Fig. 2: ein Ausführungsbeispiel einer Zwischenlage mit einer Schicht und einem Vorsprung;
Fig. 3: ein Ausführungsbeispiel einer Zwischenlage mit einer Schicht und einer Nut;
Fig. 4: ein Ausführungsbeispiel einer Zwischenlage mit einer Schicht und einer oben aufliegenden Schutzlage;
**Fig.** 5: ein Ausführungsbeispiel einer Zwischenlage mit einer Schicht und zwei Schutzlagen in Sandwichbauweise;
**Fig.** 6: ein Ausführungsbeispiel einer Zwischenlage mit einer Schicht und einem zentral gelegenen Loch;
**Fig.** 7: ein Ausführungsbeispiel einer Zwischenlage mit einer Schicht, welche als Vollmaterial ausgeführt ist;
**Fig.** 8: ein Ausführungsbeispiel einer Zwischenlage mit einer geschäumten Schicht;
Fig. 9: eine Explosionsdarstellung einer Gleisanlage mit einer Zwischenlage;
Fig. 10: einen Querschnitt durch eine Gleisanlage mit einer Zwischenlage;
Fig. 11: einen Ausschnitt einer schematischen molekularen Darstellung eines für die Zwischenlage verwendbaren Polyurethanmaterials;
Fig. 12: einen Ausschnitt einer molekularen Darstellung eines für die Zwischenlage verwendbaren Polyurethanmaterials.

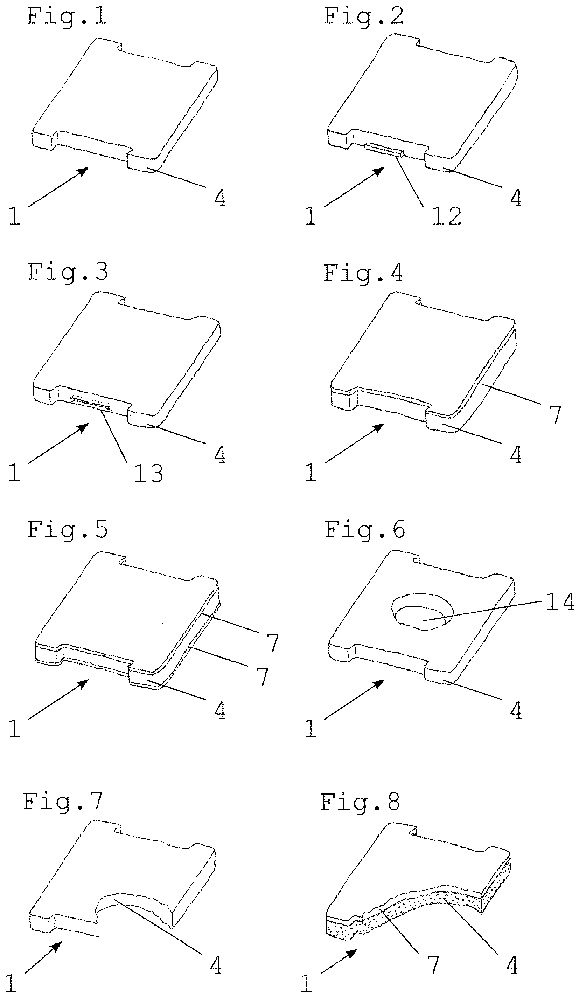

Fig. 1 zeigt eine Zwischenlage 1 mit einer Schicht 4. In diesem Ausführungsbeispiel ist die Ober- und Unterseite der Zwischenlage 1 im Wesentlichen rechteckig. Die Form der Zwischenlage 1 ist nicht auf diese Form beschränkt, sondern kann sämtliche gewünschte Formen, insbesondere eckige, runde oder Kombinationen daraus, aufweisen.

Fig. 2 zeigt ein weiteres Ausführungsbeispiel einer Zwischenlage 1 mit einer Schicht 4. Hier ist ein, auf der Vorderseite sichtbarer, sowie ein, auf der Rückseite nicht sichtbarer, Vorsprung 12 vorgesehen. Dieser Vorsprung 12 kann insbesondere die Funktion haben, durch eine Führungsplatte in der Gleisanlage 8 positioniert und/oder fixiert zu werden.

Fig. 3 zeigt ein weiteres Ausführungsbeispiel einer Zwischenlage 1 mit einer Schicht 4. Hier ist eine, auf der Vorderseite sichtbare, sowie eine, auf der Rückseite nicht sichtbare, Nut 13 vorgesehen. Diese Nut 13 kann insbesondere die Funktion haben, durch eine Führungsplatte in der Gleisanlage 8 positioniert und/oder fixiert zu werden.

Fig. 4 zeigt ein weiteres Ausführungsbeispiel einer Zwischenlage 1 mit einer Schicht 4. Hier ist zusätzlich auf der Oberseite der Schicht 4 eine Schutzlage 7 vorgesehen. Diese Schutzlage 7 ist in diesem Fall bündig mit der im Wesentlichen rechteckigen Form der Oberseite der Schicht 4 ausgeführt. Die Schutzlage 7 ist in bevorzugten Ausführungsbeispielen und auch in diesem Fall zudem dünner als die Schicht 4. Die Form der Schutzlage 7 ist nicht auf diese Form beschränkt, sondern kann sämtliche gewünschte Formen, insbesondere eckige, runde oder Kombinationen daraus, aufweisen. Auch ist es nicht notwendig, dass die Schutzlage 7 dieselbe Form wie die Schicht 4 aufweist. Die Formen der Schicht 4 und der Schutzlage 7 können in Form und Schichtstärke variieren.

Fig. 5 zeigt ein weiteres Ausführungsbeispiel einer Zwischenlage 1 mit einer Schicht 4. Hier ist zusätzlich auf der Oberseite sowie auf der Unterseite der Schicht 4 jeweils eine Schutzlage 7 vorgesehen. Diese Schutzlagen 7 sind in diesem Fall bündig mit der im Wesentlichen rechteckigen Form der Oberseite bzw. Unterseite der Schicht 4 ausgeführt. Die Schutzlagen 7 sind in diesem Fall zudem dünner als die Schicht 4. Die Form der Schutzlagen 7 sind nicht auf diese Form beschränkt, sondern können sämtliche gewünschten Formen, insbesondere eckige, runde oder Kombinationen daraus, aufweisen. Auch ist es nicht notwendig, dass die Schutzlagen 7 dieselbe Form wie die Schicht 4 aufweisen. Die Formen der Schicht 4 und der Schutzlagen 7 können in Form und Schichtstärke voneinander variieren. Außerdem müssen die beiden Schutzlagen 7 nicht dieselbe Form oder Schichtstärke aufweisen. Es kann vorteilhaft sein, die obere oder untere Schutzlage 7 beispielsweise dicker bzw. dünner vorzusehen.

Fig. 6 zeigt ein weiteres Ausführungsbeispiel einer Zwischenlage 1 mit einer Schicht 4. In diesem Ausführungsbeispiel ist die Ober- und Unterseite der Zwischenlage 1 im Wesentlichen rechteckig, aber beinhaltet ein Loch 14 in der Mitte. Dieses Loch 14 kann ein bevorzugtes Ausführungsbeispiel sein, ist aber nicht für die erfindungsgemäße Zwischenlage 1 notwendig. Weitere Ausführungsbeispiele können auch Löcher 14 unterschiedlicher Formen und/oder Anzahl aufweisen.

Fig. 7 zeigt das Ausführungsbeispiel einer Zwischenlage 1 mit einer Schicht 4 von Fig. 1, wobei hier die vordere rechte Ecke der Zwischenlage 1 ausgeschnitten ist. Es ist ersichtlich, dass die Zwischenlage 1 mit ihrer Schicht 4 aus einem Vollmaterial besteht, also im Wesentlichen keine Porosität aufweist.

Fig. 8 zeigt ein Ausführungsbeispiel einer Zwischenlage 1 mit einer Schicht 4 und einer zusätzlichen Schutzlage 7 vergleichbar mit Fig. 4, wobei hier die vordere rechte Ecke der Zwischenlage 1 ausgeschnitten ist. Im Gegensatz zu Fig. 4 ist hier ersichtlich, dass die Zwischenlage 1 mit ihrer Schicht 4 aus einem geschäumten Material besteht. Die Schicht 4 weist kleine Lufteinschlüsse auf, die für geschäumte Polyurethanschichten üblich sind. Diese Lufteinschlüsse bzw. Poren sind in der gesamten Schicht 4 sowohl im Inneren des Materials als auch an dessen Oberflächen gleichmäßig verteilt. In diesem Fall kann also davon ausgegangen werden, dass im Falle einer geschäumten Polyurethanschicht das Polyurethanmaterial sortenrein und in sich gleichmäßig verteilt ist. Die zusätzliche Schutzlage 7 ist hingegen aus einem Vollmaterial aufgebaut, z.B. aus Hart-Polyethylen, HDPE.

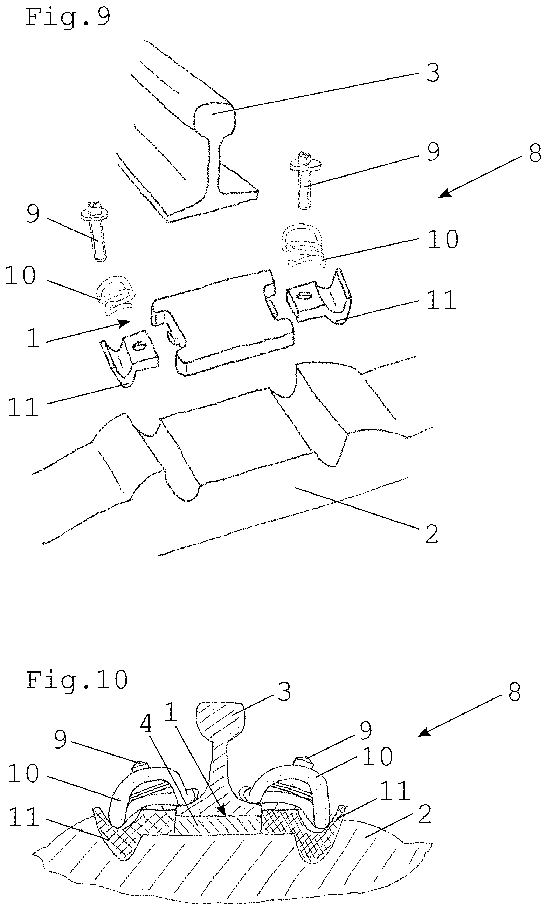

Fig. 9 zeigt eine Explosionsdarstellung eines Ausführungsbeispiels einer Gleisanlage 8, mit einer Bahnschwelle 2, einer Zwischenlage 1 sowie einer Schiene 3. Die Zwischenlage 1 wird form- und/oder kraftschlüssig zwischen einer Bahnschwelle 2 und einer Schiene 3 angeordnet. Hierfür kann mit Hilfe von Schwellenschrauben 9, Spannklammern 10 und Führungsplatten 11 ein Verbund zwischen der Bahnschwelle 2, der Zwischenlage 1 sowie der Schiene 3 hergestellt werden.

Fig. 10 zeigt einen Querschnitt eines Ausführungsbeispiels einer installierten Gleisanlage 8, bestehend aus einer Bahnschwelle 2, einer Zwischenlage 1, einer Schiene 3, Schwellenschrauben 9, Spannklammern 10 und Führungsplatten 11. Dabei liegt die Zwischenlage 1 auf der Bahnschwelle 2 auf. Die Schiene 3 liegt wiederum auf der Zwischenlage 1 auf. Um diese Gleisanlage 8 zu fixieren, wird neben der Zwischenlage 1 jeweils eine Führungsplatte 11 positioniert, sodass diese ihrer Form entsprechend passend auf der Bahnschwelle 2 aufliegt. Damit sind die zwei Führungsplatten 11 auf der einen Seite bündig mit der Bahnschwelle 2 und auf der anderen Seite bündig mit Zwischenlage 1. Die Spannklemmen 10 können auf die Führungsplatten 11 gelegt werden, sodass die Spannklemmen 10 sowohl in Kontakt mit den Führungsplatten 11 sowie der Schiene 3 stehen. Durch Schwellenschrauben 9, die von oben durch die Spannklemmen 10 sowie durch die Führungsplatten 11 bis in die Bahnschwelle 2 reichen, können diese Spannklemmen 10 fixiert werden. Dadurch kommt es zu einer Klemmverbindung zwischen der Bahnschwelle 2, der Schiene 3 sowie der dazwischen angeordneten Zwischenlage 1.

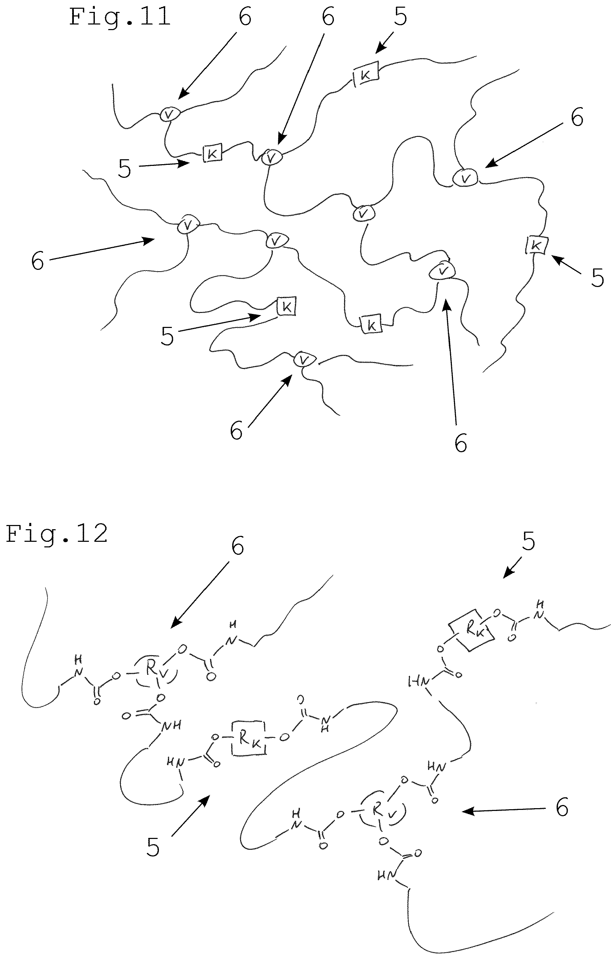

Fig. 11 zeigt einen Ausschnitt einer schematischen molekularen Darstellung eines für die Zwischenlage 1 verwendbaren Polyurethanmaterials. Die geschlängelten Linien entsprechen dabei den Polymerketten des Polyurethanmaterials. Dazwischen liegen immer wieder mit K bezeichnete Kettenverlängerer 5 sowie mit V bezeichnete Vernetzer 6. Kettenverlängerer 5 sind dabei Moleküle, die zwei Polymerketten miteinander verbinden. Kettenverlängerer 5 verbinden immer nur zwei Polymerketten miteinander. Vernetzer 6 sind Moleküle, die in diesem Ausführungsbeispiel drei Polymerketten miteinander verbinden. Vernetzer 6 können je nach Anzahl ihrer funktionellen Gruppen auch mehr als drei Polymerketten miteinander verbinden.

Fig. 12 zeigt einen Ausschnitt einer molekularen Darstellung eines für die Zwischenlage 1 verwendbaren Polyurethanmaterials. Dieser Ausschnitt entspricht im Wesentlichen dem oberen linken Quadranten der Fig. 11. Die schwarzen Linien entsprechen wieder den Polymerketten des Polyurethanmaterials, welche im Wesentlichen Diisocyanate mit der Formel (OCN)-Rₙ-(NCO) darstellen, wobei Rₙ der Rest einer Polymerkette n ist. Diese kann aus mehreren Polyurethangruppen und aus im Wesentlichen Kohlenwasserstoffen bestehen, wobei die Kohlenwasserstoffe insbesondere aliphatische oder aromatische Kohlenwasserstoffe oder Kombinationen aus beiden sein können. Der konkrete molekulare Aufbau dieser Polymerketten n mit Ausnahme der endständigen Isocyanatgruppen wurde allerdings aus Gründen der Übersichtlichkeit vernachlässigt.

Der konkrete molekulare Aufbau der Kettenverlängerer 5 und der Vernetzer 6 ist in Fig. 12 dargestellt. Ein Kettenverlängerer 5 ist in diesem Ausführungsbeispiel ein Diol und kann mit einer Isocyanat-Gruppe einer Polymerketten n zu einer Polyurethangruppe reagieren, wodurch es zum geringfügigen Verlängern der Polymerkette n kommt. Wenn beide Alkoholgruppen des Diols des Kettenverlängerers 5 mit je einer Isocyanatgruppe verschiedener Polymerketten n reagieren, werden diese beiden Ketten über den Kettenverlängerer 5 miteinander verbunden und damit weiter verlängert. Auf diese Weise entsteht ein Polymerkettenabschnitt, wie in Fig. 12 abgebildet, mit der allgemeinen Formel R_{L}-NH-(CO)-O-R_{K}-O-(CO)-NH-Rₙ. Dabei steht Rₙ für die bereits oben beschriebenen Reste der Polymerketten 1 und 2 und R_{K} für den Rest des Kettenverlängerers 5. R_{K} kann im Wesentlichen ein Kohlenwasserstoff, insbesondere ein aliphatischer oder aromatischer Kohlenwasserstoff oder eine Kombination aus beiden, sein kann.

Ein Vernetzer 6 ist in diesem Ausführungsbeispiel ein Triol und kann mit einer Isocyanat-Gruppe einer Polymerketten n zu einer Polyurethangruppe reagieren, wodurch es zum geringfügigen Verlängern der Polymerkette n kommt. Wenn alle drei Alkoholgruppen des Triols des Vernetzers 6 mit je einer Isocyanatgruppe verschiedener Polymerketten n reagieren, werden insgesamt drei Ketten über den Vernetzer 6 miteinander verbunden und damit weiter verlängert. Auf diese Weise entsteht ein Polymerkettenabschnitt, wie in Fig. 12 abgebildet, mit der allgemeinen Formel R_{V}-{O-(CO)-NH-Rₙ}. Dabei steht Rₙ für die bereits oben beschriebenen Reste der Polymerketten 1, 2 und 3 und R_{V} für den Rest des Vernetzers 6. R_{V} kann im Wesentlichen ein Kohlenwasserstoff, insbesondere ein aliphatischer oder aromatischer Kohlenwasserstoff oder eine Kombination aus beiden, sein kann.

### L e g e n d e zu den Hinweisziffern:

- 1: Zwischenlage
- 2: Bahnschwelle
- 3: Schiene
- 4: Schicht
- 5: Kettenverlängerer
- 6: Vernetzer
- 7: Schutzlage
- 8: Gleisanlage
- 9: Schwellenschraube
- 10: Spannklammer
- 11: Führungsplatte
- 12: Vorsprung
- 13: Nut
- 14: Loch

## Patentansprüche

1. Zwischenlage (1) eines Eisenbahnoberbaus zur Anordnung zwischen einer Bahnschwelle (2) und einer Schiene (3), wobei die Zwischenlage (1) zumindest eine Schicht (4) aufweist, **dadurch gekennzeichnet, dass** die Schicht (4) eine dynamische Versteifung von mindestens 1,5 aufweist, wobei sich die dynamische Versteifung aus dem Verhältnis der dynamischen Steifigkeit bei 100 Hz zur dynamischen Steifigkeit bei 10 Hz berechnet, und dass die Schicht (4) eine Polyurethanschicht ist und dass die Polyurethanschicht (4) als Komponenten zumindest einen Kettenverlängerer (5) und zumindest einen Vernetzer (6) aufweist.

2. Zwischenlage (1) nach Anspruch 1, **dadurch gekennzeichnet, dass** die Schicht (4) eine dynamische Versteifung von mindestens 1,5 aufweist, wobei sich die dynamische Versteifung aus dem Verhältnis der dynamischen Steifigkeit bei 10 Hz zur dynamischen Steifigkeit bei 1 Hz berechnet.

3. Zwischenlage (1) nach Anspruch 1 oder 2, **dadurch gekennzeichnet, dass** der mindestens eine Kettenverlängerer (5)
- ein mittleres Molekulargewicht von 62-1.000 g/mol, insbesondere von 75-350 g/mol, aufweist und/oder
- einen Massenanteil bezogen auf Massenanteile in einem Polyol des Polyurethans von 0,1-20 pphp, insbesondere 3-18 pphp, aufweist und/oder
- zwei Alkoholgruppen aufweist und/oder mindestens eine sekundäre Alkoholgruppe aufweist.

4. Zwischenlage (1) nach einem der Ansprüche 1 bis 3, **dadurch gekennzeichnet, dass** der mindestens eine Vernetzer (6)
- ein mittleres Molekulargewicht von 90-1.000 g/mol, insbesondere von 100-350 g/mol, aufweist und/oder
- einen Massenanteil bezogen auf Massenanteile in einem Polyol des Polyurethans von 0,1-20 pphp, insbesondere 3-18 pphp, aufweist und/oder
- mindestens drei Alkoholgruppen aufweist und/oder
- mindestens eine sekundäre Alkoholgruppe aufweist.

5. Zwischenlage (1) nach einem der Ansprüche 1 bis 4, **dadurch gekennzeichnet, dass** die Polyurethanschicht (4) sortenrein und/oder in sich gleichmäßig aufgebaut ist.

6. Zwischenlage (1) nach einem der Ansprüche 1 bis 5, **dadurch gekennzeichnet, dass** die Polyurethanschicht (4) eine geschäumte Schicht mit einer Porosität von maximal 20% ist.

7. Zwischenlage (1) nach einem der Ansprüche 1 bis 6, **dadurch gekennzeichnet, dass** die Zwischenlage zumindest eine Schutzlage (7) aufweist, wobei die Schutzlage (7) auf zumindest einer Oberfläche der Schicht (4) angeordnet ist, vorzugsweise jeweils eine der Schutzlagen (7) auf einander gegenüberliegenden Oberflächen der Schicht (4) angeordnet sind.

8. Zwischenlage (1) nach Anspruch 7, **dadurch gekennzeichnet, dass** die zumindest eine Schutzlage (7) eine geringere Permeabilität als die Schicht (4) aufweist und/oder dass die Schutzlage (7) härter als die Schicht (4) ist.

9. Zwischenlage (1) nach Anspruch 7 oder 8, **dadurch gekennzeichnet, dass** die Schutzlage (7) Polyethylen, vorzugsweise Hart-Polyethylen, aufweist oder daraus besteht.

10. Gleisanlage (8) mit zumindest einer Bahnschwelle (2) und zumindest zwei Schienen (3), **dadurch gekennzeichnet, dass** zwischen der Bahnschwelle (2) und der jeweiligen Schiene (3) eine Zwischenlage (1) nach einem der Ansprüche 1 bis 9 angeordnet ist.

11. Verwendung einer Zwischenlage (1) nach einem der Ansprüche 1 bis 9, **dadurch gekennzeichnet, dass** die Zwischenlage (1) zwischen einer Bahnschwelle (2) und einer Schiene (3) angeordnet wird.

## Claims

1. A rail pad (1) of a railway superstructure for arranging between a railway sleeper (2) and a rail (3), wherein the rail pad (1) has at least one layer (4), **characterised in that** the layer (4) has a dynamic stiffening of at least 1.5, the dynamic stiffening being calculated from the ratio of the dynamic stiffness at 100 Hz to the dynamic stiffness at 10 Hz, and **in that** the layer (4) is a polyurethane layer, and **in that** the polyurethane layer (4) includes as components at least one chain extender (5) and at least one cross-linking agent (6).

2. A rail pad (1) according to claim 1, **characterised in that** the layer (4) has a dynamic stiffening of at least 1.5, the dynamic stiffening being calculated from the ratio of the dynamic stiffness at 10 Hz to the dynamic stiffness at 1 Hz.

3. A rail pad (1) according to claim 1 or 2, **characterised in that** the at least one chain extender (5)
- has an average molecular weight of 62 - 1,000 g/mol, in particular of 75 - 350 g/mol, and/or
- has a mass fraction relative to mass fractions in a polyol of the polyurethane of 0.1 - 20 pphp, in particular 3 - 18 pphp, and/or
- has two alcohol groups and/or
has at least one secondary alcohol group.

4. A rail pad (1) according to one of claims 1 to 3, **characterised in that** the at least one cross-linking agent (6)
- has an average molecular weight of 90 - 1,000 g/mol, in particular of 100 - 350 g/mol, and/or
- has a mass fraction relative to mass fractions in a polyol of the polyurethane of 0.1 - 20 pphp, in particular 3 - 18 pphp, and/or
- has at least three alcohol groups, and/or
- has at least one secondary alcohol group.

5. A rail pad (1) according to one of claims 1 to 4, **characterised in that** the polyurethane layer (4) is mono-material and/or is inherently uniformly constructed.

6. A rail pad (1) according to one of claims 1 to 5, **characterised in that** the polyurethane layer (4) is a foamed layer with a porosity of at most 20%.

7. A rail pad (1) according to one of claims 1 to 6, **characterised in that** the rail pad has at least one protective layer (7), with the protective layer (7) being arranged on at least one surface of the layer (4), preferably in each case one of the protective layers (7) being arranged on surfaces of the layer (4) which are located opposite each other.

8. A rail pad (1) according to claim 7, **characterised in that** the at least one protective layer (7) has a lower permeability than the layer (4), and/or **in that** the protective layer (7) is harder than the layer (4).

9. A rail pad (1) according to claim 7 or 8, **characterised in that** the protective layer (7) includes or consists of polyethylene, preferably high-density polyethylene.

10. A track system (8) including at least one railway sleeper (2) and at least two rails (3), **characterised in that** a rail pad (1) according to one of claims 1 to 9 is arranged between the railway sleeper (2) and the respective rail (3).

11. Use of a rail pad (1) according to one of claims 1 to 9, **characterised in that** the rail pad (1) is arranged between a railway sleeper (2) and a rail (3).

## Revendications

1. Couche intermédiaire (1) d'une superstructure ferroviaire destinée à être disposée entre une traverse de chemin de fer (2) et un rail (3), la couche intermédiaire (1) présentant au moins une couche (4), **caractérisée en ce que** la couche (4) présente un raidissement dynamique d'au moins 1,5, le raidissement dynamique étant calculé à partir du rapport entre la rigidité dynamique à 100 Hz et la rigidité dynamique à 10 Hz, et **en ce que** la couche (4) est une couche de polyuréthane, et **en ce que** la couche de polyuréthane (4) présente, en tant que composants, au moins un allongeur de chaîne (5) et au moins un agent de réticulation (6).

2. Couche intermédiaire (1) selon la revendication 1, **caractérisée en ce que** la couche (4) présente un raidissement dynamique d'au moins 1,5, le raidissement dynamique étant calculé à partir du rapport entre la rigidité dynamique à 10 Hz et la rigidité dynamique à 1 Hz.

3. Couche intermédiaire (1) selon la revendication 1 ou 2, **caractérisée en ce que** ledit au moins un allongeur de chaîne (5)
• présente une masse moléculaire moyenne comprise entre 62 et 1 000 g/mol, en particulier entre 75 et 350 g/mol, et/ou
• présente une proportion massique, rapportée aux proportions massiques dans un polyol du polyuréthane, comprise entre 0,1 et 20 pphp, en particulier entre 3 et 18 pphp, et/ou
• présente deux groupes alcool et/ou présente au moins un groupe alcool secondaire.

4. Couche intermédiaire (1) selon l'une des revendications 1 à 3, **caractérisée en ce que** ledit au moins un agent de réticulation (6)
• présente une masse moléculaire moyenne comprise entre 90 et 1 000 g/mol, en particulier entre 100 et 350 g/mol, et/ou
• présente une proportion massique, rapportée aux proportions massiques dans un polyol du polyuréthane, comprise entre 0,1 et 20 pphp, en particulier entre 3 et 18 pphp, et/ou
• présente au moins trois groupes alcool et/ou
• présente au moins un groupe alcool secondaire.

5. Couche intermédiaire (1) selon l'une des revendications 1 à 4, **caractérisée en ce que** la couche de polyuréthane (4) est constituée d'un seul matériau, et/ou est de structure uniforme.

6. Couche intermédiaire (1) selon l'une des revendications 1 à 5, **caractérisée en ce que** la couche de polyuréthane (4) est une couche expansée présentant une porosité maximale de 20 %.

7. Couche intermédiaire (1) selon l'une des revendications 1 à 6, **caractérisée en ce que** la couche intermédiaire présente au moins une couche de protection (7), la couche de protection (7) étant disposée sur au moins une surface de la couche (4), une couche de protection (7) étant disposée de préférence sur chacune des surfaces opposées l'une à l'autre de la couche (4).

8. Couche intermédiaire (1) selon la revendication 7, **caractérisée en ce que** ladite au moins une couche de protection (7) présente une perméabilité inférieure à celle de la couche (4), et/ou **en ce que** la couche de protection (7) est plus dure que la couche (4).

9. Couche intermédiaire (1) selon la revendication 7 ou 8, **caractérisée en ce que** la couche de protection (7) présente du polyéthylène, de préférence du polyéthylène dur, ou est constituée de celui-ci.

10. Installation de voie ferrée (8) comprenant au moins une traverse de chemin de fer (2) et au moins deux rails (3), **caractérisée en ce qu'**une couche intermédiaire (1) selon l'une des revendications 1 à 9 est disposée entre la traverse de chemin de fer (2) et le rail (3) correspondant.

11. Utilisation d'une couche intermédiaire (1) selon l'une des revendications 1 à 9, **caractérisée en ce que** la couche intermédiaire (1) est disposée entre une traverse de chemin de fer (2) et un rail (3).
